# EUROPEAN PATENT SPECIFICATION

(11) **EP 4 403 336 B1**
(45) Date of publication and mention of the grant of the patent: **10.09.2025**
(21) Application number: 22911680.1
(22) Date of filing: 02.12.2022
(51) Int. Cl.: B29C 65/02, B29C 65/14, B29C 65/18, B29C 65/24, B29C 65/72, B29C 65/78, H01M 10/04, H01M 50/105, H01M 50/178, B29L 31/00, B29L 31/34

(54) **DEVICE AND METHOD FOR MANUFACTURING SECONDARY BATTERY**
VORRICHTUNG UND VERFAHREN ZUR HERSTELLUNG EINER SEKUNDÄRBATTERIE
APPAREIL DE FABRICATION ET PROCÉDÉ DE FABRICATION DE BATTERIE SECONDAIRE

(30) Priority: 20.12.2021 KR 20210183211
(43) Date of publication of application: 24.07.2024
(73) Proprietor: LG Energy Solution, Ltd., Seoul 07335 (KR)
(72) Inventor: NOH, Hyung Jun, Daejeon 34122 (KR); KIM, Hyun Tae, Daejeon 34122 (KR); KIM, Young Soon, Daejeon 34122 (KR)
(74) Representative: Plasseraud IP
(86) International application number: PCT/KR2022/019483
(87) International publication number: WO 2023/121047

(56) References cited:
- JP-A- 2005 056 815
- JP-A- 2007 242 548
- KR-A- 20140 086 907
- KR-A- 20140 086 907
- KR-A- 20160 115 167
- KR-A- 20170 110 300
- US-A- 5 057 169

## Description

### TECHNICAL FIELD

The present invention relates to a device and method for manufacturing a secondary battery, which is capable of improving sealing force of a sealing part of a pouch from which an electrode lead is drawn out.

### BACKGROUND ART

In general, secondary batteries refer to batteries, which are chargeable and dischargeable unlike non-rechargeable primary batteries, and are widely used in electronic devices such as mobile phones, notebook computers and camcorders, electric vehicles, or the like.

Such secondary batteries include an electrode assembly provided with an electrode tab, an electrode lead coupled to the electrode tab, a pouch that accommodates the electrode assembly with a front end of the electrode lead drawn out to the outside thereof, and a lead film provided in the electrode lead disposed on a sealing part of the pouch. The pouch includes an accommodation part that accommodates the electrode assembly, and the sealing part that is formed along an edge surface of the accommodation part and seals the accommodation part.

A method for manufacturing a secondary battery may include an accommodating process of accommodating an electrode assembly in an accommodation part of a pouch, and a sealing process of sealing a sealing part of the pouch using a pair of sealing blocks. In the sealing process, the sealing part of the pouch may be sealed by raising a temperature of the pair of sealing blocks to apply heat to the sealing part.

Here, as a lead film and the sealing part are thermally fused to each other, the sealing part of the pouch from which an electrode lead is drawn out is sealed. Then, there is a problem that the sealing force is reduced because of a heat loss through the electrode lead made of a metal material.

In order to solve such a problem, a lead heater system is introduced which supplies a heat source to the electrode lead, and accordingly, the heat loss through the electrode lead may be minimized. Consequently, the sealing force of the sealing part may be increased.

Although the sealing process with the introduced lead heater system may minimize the heat loss through the electrode lead because the electrode lead is directly heated, it has a problem that there is a temperature difference in the entire pouch from which the electrode lead is drawn out. Such a problem leads to a problem that there is a sealing force difference in the entire sealing part of the pouch from which the electrode lead is drawn out. In particular, there is a limit to supply of sufficient heat to the electrode lead or the sealing blocks in a short time.

Examples and embodiments of prior art may be found in US 5 057 169 A and KR 2014 0086907 A.

### DISCLOSURE OF THE INVENTION

### TECHNICAL PROBLEM

The present invention for solving the problems as above may include a preheating member to heat a sealing part of a pouch and a sealing block to a preheat temperature lower than a seal temperature before the sealing part of the pouch is sealed. Accordingly, as an electrode lead is also heated to the preheat temperature together with the sealing part of the pouch, a heat loss through the electrode lead may be minimized. Consequently, sealing force of the sealing part of the pouch from which the electrode lead is drawn out may be increased. In particular, the sealing part of the pouch from which the electrode lead is drawn out may be uniformly heated, and the temperature of the sealing block may be suppressed from decreasing during continuous manufacture. That is, when secondary batteries are continuously sealed through the sealing block, the temperature of a heat source may gradually decrease and accordingly, a difference in sealing force may occur between the secondary batteries produced at the beginning of a sealing process and the secondary batteries produced at each of the middle and the later part of the sealing process. An object of the present invention for preventing the difference is to provide a device and method for manufacturing a secondary battery, which may preheat the sealing block to prevent a decrease in temperature of the heat source of the sealing block and consequently, may maintain the sealing force to be uniform in the overall sealing process.

### TECHNICAL SOLUTION

A device for manufacturing a secondary battery according to the present invention for achieving the object as above may include: a pair of sealing blocks that are disposed at both sides, respectively, of a sealing part of a pouch, from which an electrode lead is drawn out, and compress and seal the sealing part at a seal temperature and pressure; and a preheating member that preheats each of the sealing part of the pouch and the pair of sealing blocks to a preheat temperature. The preheating member may include: a first heating body that preheats a surface of the sealing part, on which each of the pair of sealing blocks is disposed, to the preheat temperature; and a second heating body that preheats a surface of each of the pair of sealing blocks, which faces the sealing part, to the preheat temperature. The preheating member may further include a temperature detecting sensor, which detects a temperature of each of the sealing part of the pouch and the pair of sealing blocks, and a controller which stops the preheating of the sealing part of the pouch and the pair of sealing blocks by stopping an operation of each of the first heating body and the second heating body when the temperature detected by the temperature detecting sensor rises to the preheat temperature.

The preheat temperature of the sealing part preheated by the first heating body and the preheat temperature of the pair of sealing blocks preheated by the second heating body may be the same as or different from each other.

When the preheat temperature of the sealing part preheated by the first heating body and the preheat temperature of the pair of sealing blocks preheated by the second heating body are different from each other, the preheat temperature of the sealing part preheated by the first heating body may be lower than the preheat temperature of the pair of sealing blocks preheated by the second heating body.

The preheat temperature may be set to 100°C to 230°C.

Each of the first heating body and the second heating body may be provided as a heating lamp.

The preheating member may further include a first moving body, which allows the first heating body to move toward the sealing part or return to an initial position, and a second moving body which allows the second heating body to move toward each of the pair of sealing blocks or return to an initial position.

The preheat temperature may be lower than the seal temperature.

A method for manufacturing a secondary battery according to the present invention may include: a transfer process of transferring the secondary battery, wherein the secondary battery includes an electrode assembly and a pouch that accommodates the electrode assembly; a disposing process of disposing a pair of sealing blocks at both sides, respectively, of a sealing part formed in the pouch of the secondary battery; a preheating process of preheating, by using a preheating member, to a preheat temperature a surface of each of the sealing part of the pouch and the pair of sealing blocks, which corresponds to the preheating member; and a sealing process of heating to a seal temperature the sealing blocks preheated to the preheat temperature and then compressing and sealing the sealing part of the pouch, which is preheated to the preheat temperature. The preheating process may include preheating the surface of the sealing part, on which the pair of sealing blocks are disposed, to the preheat temperature by a first heating body of the preheating member, and preheating the surface of each of the pair of sealing blocks, which faces the sealing part, to the preheat temperature by a second heating body of the preheating member. The preheating process may further include detecting a temperature of each of the sealing part of the pouch and the pair of sealing blocks by a temperature detecting sensor, and stopping, by a controller, the preheating of the sealing part of the pouch and the pair of sealing blocks by stopping an operation of each of the first heating body and the second heating body when the temperature detected by the temperature detecting sensor rises to the preheat temperature.

In the preheating process, the preheat temperature of the sealing part preheated by the first heating body and the preheat temperature of the pair of sealing blocks preheated by the second heating body may be the same as or different from each other.

In the preheating process, when the preheat temperature of the sealing part preheated by the first heating body and the preheat temperature of the pair of sealing blocks preheated by the second heating body are different from each other, the preheat temperature of the sealing part preheated by the first heating body may be lower than the preheat temperature of the pair of sealing blocks preheated by the second heating body.

The preheat temperature may be set to 100°C to 230°C.

A heating lamp may be used as each of the first heating body and the second heating body.

The transfer process may further include a temporarily preheating the sealing part formed in the pouch of the secondary battery during transfer.

### ADVANTAGEOUS EFFECTS

The device and method for manufacturing the secondary battery according to the present invention may include the preheating member to heat the sealing part of the pouch and the sealing block to the preheat temperature before the sealing part of the pouch is sealed. Accordingly, the heat loss through the electrode lead may be minimized to increase the sealing force of the sealing part of the pouch from which the electrode lead is drawn out. In particular, the entire sealing part of the pouch from which the electrode lead is drawn out may be uniformly heated, and the temperature of the sealing block may be suppressed from being reduced and becoming mild during the continuous manufacture.

### BRIEF DESCRIPTION OF THE DRAWINGS

FIG. 1 is a perspective view illustrating a secondary battery according to a first embodiment of the present invention.
FIG. 2 is a front view illustrating a device for manufacturing a secondary battery according to a first embodiment of the present invention.
FIG. 3 is a front view illustrating a state in which a sealing part of a pouch is compressed with a sealing block of the device for manufacturing a secondary battery according to the first embodiment of the present invention.
FIG. 4 is a flowchart illustrating a method for manufacturing a secondary battery according to a first embodiment of the present invention.
FIG. 5 is a side view illustrating a transfer process of the method for manufacturing a secondary battery according to the first embodiment of the present invention.
FIG. 6 is a side view illustrating a disposing process and a preheating process of the method for manufacturing a secondary battery according to the first embodiment of the present invention.
FIG. 7 is a side view illustrating a sealing process of the method for manufacturing a secondary battery according to the first embodiment of the present invention.
FIG. 8 is a front view illustrating a device for manufacturing a secondary battery according to a second embodiment of the present invention.

### MODE FOR CARRYING OUT THE INVENTION

Hereinafter, embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein. The parts unrelated to the description will be ruled out in the drawings in order to clearly describe the present invention. Like reference numerals refer to like elements throughout the whole specification.

### [Secondary battery according to first embodiment of present invention]

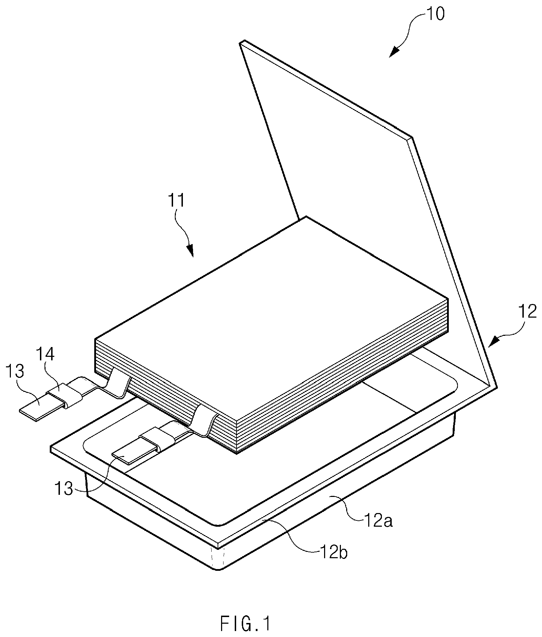

Referring to FIG. 1, a secondary battery 10 according to a first embodiment of the present invention includes an electrode assembly 11, an electrode lead 13 coupled to an electrode tab of the electrode assembly 11, a pouch 12 that accommodates the electrode assembly 11 with a front end of the electrode lead 13 drawn out to the outside thereof, and a lead film 14 provided in the electrode lead 13 disposed on a sealing part of the pouch.

The electrode assembly 11 has a structure in which a plurality of separators and a plurality of electrodes are alternately stacked. The plurality of electrodes may be a positive electrode and a negative electrode. The plurality of electrodes are provided with an electrode tab, and the electrode lead 13 is coupled to the electrode tab.

The electrode tab includes a positive electrode tab provided in the positive electrode, and a negative electrode tab provided in the negative electrode. The electrode lead includes a positive electrode lead coupled to the positive electrode tab and a negative electrode lead coupled to the negative electrode tab.

The pouch 12 includes an accommodation part 12a, which accommodates the electrode assembly 11, and a sealing part 12b which is formed along an edge surface of the accommodation part 12a and seals the accommodation part 12a.

The lead film 14 is intended to increase sealing force between the electrode lead 13 and the sealing part 12b of the pouch 12. That is, the lead film 14 is provided in a shape surrounding a main surface of the electrode lead 13 disposed on the sealing part 12b.

The secondary battery having the structure as above may be manufactured by a device for manufacturing a secondary battery according to a first embodiment of the present invention.

That is, the device 100 for manufacturing a secondary battery according to the first embodiment of the present invention manufactures the secondary battery by accommodating the electrode assembly 11 in the accommodation part 12a of the pouch 12 and then using a pair of sealing blocks 110 to seal the sealing part 12b of the pouch 12.

In particular, the device 100 for manufacturing a secondary battery according to the first embodiment of the present invention may preheat the sealing part 12b of the pouch 12 and the sealing blocks 110 before the sealing part 12b of the pouch 12 is sealed. Accordingly, the sealing force of the sealing part 12b of the pouch 12 from which the electrode lead 13 is drawn out may be increased, and a loss of heat that escapes through the electrode lead may be eliminated or minimized to increase the sealing force.

The device 100 for manufacturing a secondary battery according to the first embodiment of the present invention may also seal the sealing part 12b of the pouch 12, which is not provided with the electrode lead 13, but the sealing part of the pouch from which the electrode lead 13 is drawn out will be described herein as one embodiment.

### [Device for manufacturing secondary battery according to first embodiment of present invention]

As illustrated in FIG. 1, a device 100 for manufacturing a secondary battery according to a first embodiment of the present invention includes a pair of sealing blocks 110 and a preheating member 120.

### Pair of sealing blocks

The pair of sealing blocks 110 are intended to seal a sealing part of a pouch in which an electrode assembly 11 is accommodated. In particular, the pair of sealing blocks 110 are intended to compress and seal the sealing part of the pouch, from which an electrode lead 13 is drawn out, by heat and pressure.

That is, the pair of sealing blocks 110 are disposed to correspond to both sides, respectively, of a sealing part 12b of a pouch 12 from which the electrode lead 13 is drawn out, and compresses and seals the sealing part 12b at a seal temperature and pressure.

Here, the seal temperature refers to a temperature of the heated sealing blocks for thermally fusing the sealing part 12b. For example, the seal temperature may be 190°C to 230°C.

### Preheating member

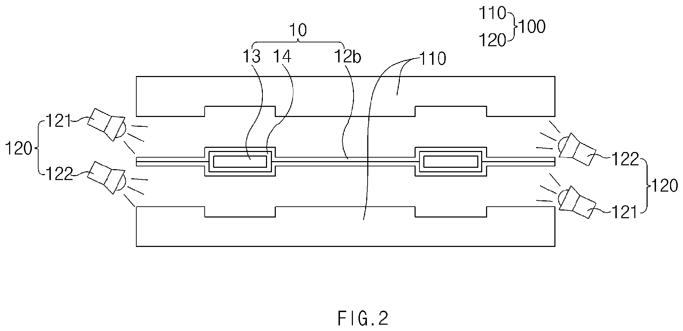

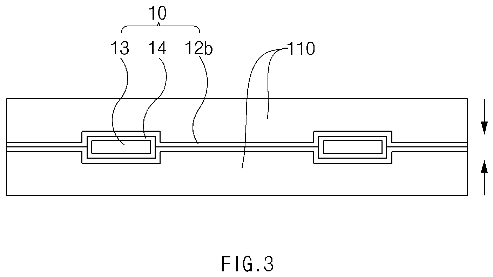

As illustrated in FIGS. 2 and 3, the preheating member 120 is intended to preheat the sealing part 12b of the pouch 12 and the pair of sealing blocks 110 to a preheat temperature before the sealing part of the pouch 12 is sealed. That is, when the sealing part 12b of the pouch 12 and the pair of sealing blocks 110 are preheated to the preheat temperature, the preheating member 120 may suppress a temperature of the sealing blocks from being reduced and becoming mild during the continuous manufacturing. That is, when secondary batteries are continuously sealed through the sealing blocks, a heat source becomes weak and accordingly, a sealing force difference may occur between the secondary batteries produced at the beginning of a sealing process and the secondary batteries produced at each of the middle and the later part of the sealing process. In order to prevent the difference, the present invention may preheat the sealing blocks to prevent the heat source of the sealing blocks from becoming weak and consequently, may uniformly maintain the sealing force in the overall sealing process. Moreover, as the electrode lead 13 is preheated together with the sealing part 12b of the pouch 12, a loss of heat that escapes through the electrode lead 13 may be eliminated or minimized.

In one example, the preheating member 120 includes a first heating body 121 that preheats to the preheat temperature a surface of the sealing part 12b, on which each of the pair of sealing blocks 110 is disposed, and a second heating body 122 that preheats to the preheat temperature a surface of each of the pair of sealing blocks 110, which faces the sealing part 12b.

Accordingly, as the preheating member 120 heats the sealing part 12b of the pouch 12 and the pair of sealing blocks 110 to the preheat temperature, time for which thermal energy required for high sealing force is supplied to the pouch may be reduced to increase productivity. Moreover, as the temperature of the sealing block is suppressed from decreasing during the continuous manufacturing, the secondary batteries having uniform sealing quality may be produced. In order words, the sealing block that is a heat source needs to press the pouch for a long time (e.g., 5 seconds) for strong sealing, and addition of the preheating may minimize the loss of the heat, which escapes the sealing part of the pouch, and time for which the sealing block presses the pouch may be greatly reduced accordingly (e.g., 2 seconds). Consequently, the productivity may be increased due to the reduction of the sealing time and securing of the sealing force (for example, when the sealing time is 5 seconds, 720 secondary batteries (3600S/5S=720) may be produced per hour, and when the sealing time is 2 seconds, 1800 secondary batteries (3600S/2S=1800) may be produced per hour. That is, approximately two-fold increased productivity may be achieved.

In particular, as the electrode lead 13 is preheated together with the sealing part 12b of the pouch 12, the loss of heat that escapes through the electrode lead 13 during sealing the sealing part 12b of the pouch 12 may be prevented or minimized and consequently, the sealing part 12b of the pouch 12 may be improved. Furthermore, the preheating member 120 may minimize the temperature difference of the entire sealing part 12b of the pouch 12 and consequently, the entire sealing part 12b of the pouch 12 may be uniformly sealed to prevent a sealing defect.

The preheat temperature of the sealing part 12b preheated by the first heating body 121 and the preheat temperature of the pair of sealing blocks 110 preheated by the second heating body 122 may be the same as or different from each other.

Here, when the preheat temperature of the sealing part 12b preheated by the first heating body 121 and the preheat temperature of the pair of sealing blocks 110 preheated by the second heating body 122 are the same as each other, the first heating body 121 and the second heating body 122 may heat the sealing part 12b of the pouch 12 and the pair of sealing blocks 110 simultaneously at the same temperature. The same heating body may be used as each of the first heating body 121 and the second heating body 122.

When the preheat temperature of the sealing part 12b preheated by the first heating body 121 and the preheat temperature of the pair of sealing blocks 110 preheated by the second heating body 122 are different from each other, the preheat temperature of the sealing part 12b preheated by the first heating body 121 may be lower than the preheat temperature of the pair of sealing blocks preheated by the second heating body 122. That is, a heating temperature of the sealing part 12b highly likely to be deformed by heat is set to a lower temperature, and a heating temperature of the sealing blocks 110 for sealing the pouch 12 is set to a higher temperature.

The preheat temperature of each of the sealing part and the sealing blocks may be set to 100°C to 230°C, preferably 150°C to 200°C. Here, when the preheat temperature of the sealing blocks is 100°C or lower, it takes much time to raise the preheat temperature of the sealing blocks to the seal temperature. When the preheat temperature of the sealing blocks is 230°C or higher, it takes less time to raise the preheat temperature of the sealing blocks to the seal temperature, but there is a problem that workability is reduced because it takes much time to raise the temperature of the sealing blocks to the preheat temperature.

A heating lamp may be used as each of the first heating body 121 and the second heating body 122. Accordingly, the entireties of the sealing part 12b of the pouch 12 and the pair of sealing blocks 110 may be stably heated.

Referring to FIG. 3, the preheating member 120 may further include a temperature detecting sensor 123, which detects the temperature of each of the sealing part 12b of the pouch 12 and the pair of sealing blocks 110, and a controller 124 which stops the preheating of the sealing part 12b of the pouch 12 and the pair of sealing blocks 110 by stopping an operation of each of the first heating body 121 and the second heating body 122 when the temperature detected by the temperature detecting sensor 123 rises to the preheat temperature. Accordingly, as the preheating member 120 includes the temperature detecting sensor 123 and the controller 124, each of the sealing part 12b of the pouch 12 and the pair of sealing blocks 110 may be stably preheated to the preheat temperature.

Thus, as the device 100 for manufacturing a secondary battery according to the first embodiment of the present invention includes the preheating member 120, the sealing force of the sealing part 12b of the pouch 12 from which the electrode lead 13 is drawn out may be increased and the sealing defect may be prevented.

Hereinafter, a method for manufacturing a secondary battery according to a first embodiment of the present invention will be described.

### [Method for manufacturing secondary battery according to first embodiment of present invention]

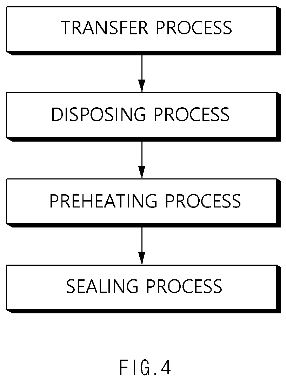

As illustrated in FIG. 4, a method for manufacturing a secondary battery according to a first embodiment of the present invention includes a transfer process, a disposing process, a preheating process, and a sealing process.

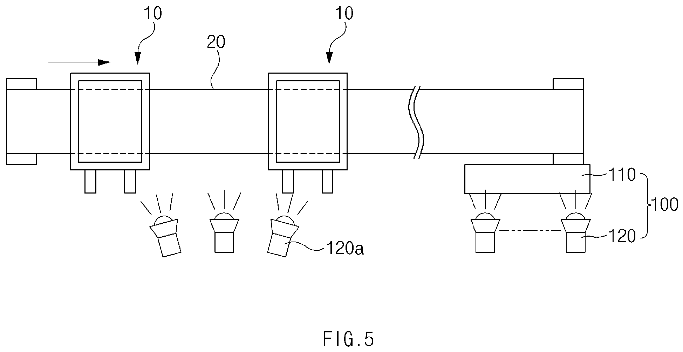

FIG. 5 is a side view illustrating the transfer process of the method for manufacturing a secondary battery according to the first embodiment of the present invention.

### Transfer process

In the transfer process, a secondary battery 10 is transferred to the disposing process by a transfer device 20 using a conveyor belt (not shown) or the like. Referring to FIG. 1, the secondary battery 10 includes an electrode assembly 11, an electrode lead 13 coupled to the electrode assembly 11, a pouch 12 that accommodates the electrode assembly 11 with a front end of the electrode lead 13 drawn out to the outside, and a lead film 14 provided in the electrode lead 13 disposed in the pouch 12.

The secondary battery 10 is described above in detail and thus, the detailed description thereof will be omitted.

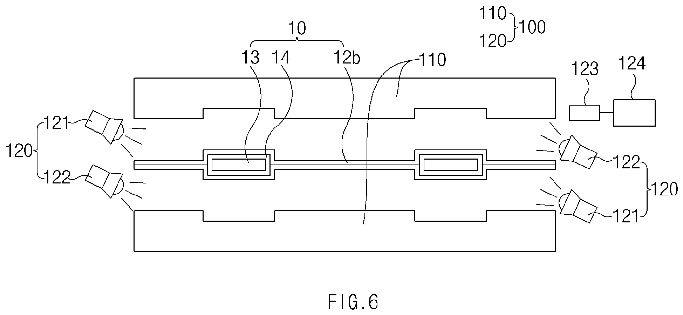

FIG. 6 is a side view illustrating the disposing process and the preheating process of the method for manufacturing a secondary battery according to the first embodiment of the present invention.

### Disposing process

In the disposing process, each of a pair of sealing blocks 110 is disposed to correspond to each of both sides of a sealing part 12b formed in the pouch 12 of the secondary battery, preferably both sides of the sealing part 12b of the pouch 12 from which the electrode lead 13 is drawn out. Here, each of the pair of sealing blocks 110 is disposed to be spaced a predetermined distance from the sealing part 12b of the pouch 12.

### Preheating process

In the preheating process, a preheating member 120 is used to heat to a preheat temperature a corresponding surface of each of the sealing part 12b of the pouch 12 and the pair of sealing blocks 110. That is, the preheating process may include preheating the surface of the sealing part 12b, on which each of the pair of sealing blocks 110 is disposed, to the preheat temperature by using a first heating body 121 of the preheating member 120, and preheating the surface of each of the pair of sealing blocks 110, which faces the sealing part 12b, to the preheat temperature by using a second heating body 122 of the preheating member 120.

In the preheating process, the preheat temperature of the sealing part 12b preheated by the first heating body 121 and the preheat temperature of the pair of sealing blocks 110 preheated by the second heating body 122 may be the same as or different from each other.

When the preheat temperature of the sealing part 12b preheated by the first heating body 121 and the preheat temperature of the pair of sealing blocks 110 preheated by the second heating body 122 are different from each other, the preheat temperature of the sealing part 12b preheated by the first heating body 121 may be lower than the preheat temperature of the pair of sealing blocks 110 preheated by the second heating body 122. As the preheat temperature of the sealing part 12b is set to a temperature lower than that of the sealing block 110, deformation of the sealing part 12b is prevented, and as the preheat temperature of the sealing block 110 is set to a temperature higher than that of the sealing part 12b, time required for raising the temperature to a seal temperature is reduced.

The preheat temperature of each of the sealing part and the sealing block may be set to 100°C to 230°C, preferably 150°C to 200°C.

A heating lamp that emits high-temperature light may be used as each of the first heating body 121 and the second heating body 122. Accordingly, the entireties of the sealing part 12b and the sealing block 110 may be stably and uniformly heated to the preheat temperature.

The preheating process may further include detecting the temperature of each of the sealing part 12b of the pouch 12 and the pair of sealing blocks 110 by a temperature detecting sensor 123, and stopping, by a controller 124, the preheating of the sealing part 12b of the pouch 12 and the pair of sealing blocks 110 by stopping an operation of each of the first heating body 121 and the second heating body 122 when the temperature detected by the temperature detecting sensor 123 rises to the preheat temperature. Accordingly, the sealing part 12b of the pouch 12 and the pair of sealing blocks 110 may be stably preheated to the preheat temperature in the preheating process.

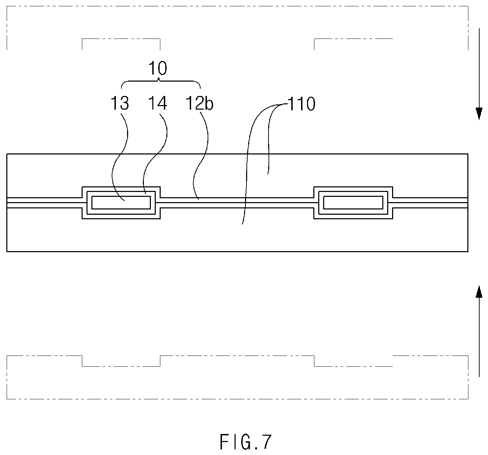

FIG. 7 is a side view illustrating the sealing process of the method for manufacturing a secondary battery according to the first embodiment of the present invention.

### Sealing process

In the sealing process, the pair of sealing blocks 110 are heated to the seal temperature higher than the preheat temperature and then, the sealing part 12b of the pouch 12, which has been preheated to the preheat temperature, are compressed and sealed using the pair of sealing blocks 110. Here, as the pair of sealing blocks 110 seal the preheated pouch, time required for supplying a heat source necessary for the sealing may be greatly reduced. In particular, when the sealing part 12b of the pouch 12 is compressed by the pair of sealing blocks 110, a heat loss may be prevented because the electrode lead 13 drawn out from the sealing part 12b of the pouch 12 is also heated to the preheat temperature. Consequently, a sealing force decrease and a defect of the sealing part 12b of the pouch 12 may be prevented.

That is, as the electrode lead 13 is preheated to the preheat temperature, a temperature different may be minimized between the electrode lead and the pouch 12 heated and compressed by the pair of sealing blocks 110. Accordingly, the loss of heat that escapes through the electrode lead may be eliminated or minimized.

When the processes as above are completed, the secondary battery 10 that is a complete product may be manufactured.

Referring to FIG. 5, the transfer process may further include temporarily preheating the sealing part 12b, which is formed in the pouch 12 of the secondary battery 10 during transfer, by using a temporary heating body 120a. The temporary heating body 120a is provided in plurality to be installed along a transfer line of the secondary battery 10. Accordingly, time required for raising the temperature of the sealing part 12b of the pouch 12 to the preheat temperature in the preheating process may be greatly reduced. Here, in the temporarily preheating process, the sealing part 12b of the pouch 12 may be preheated to a temperature lower than the temperature to which the sealing part 12b of the pouch 12 is preheated in the preheating process.

Hereinafter, another embodiment of the present invention will be described using the same reference symbol for the same components as the embodiment described above, and duplicate description will be omitted.

### [Device for manufacturing secondary battery according to second embodiment of present invention]

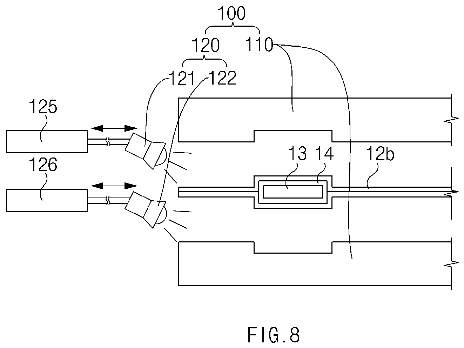

As illustrated in FIG. 8, a device 100 for manufacturing a secondary battery according to a second embodiment of the present invention includes a pair of sealing blocks 110 that are disposed to correspond to both sides, respectively, of a sealing part 12b of a pouch 12 from which an electrode lead 13 is drawn out, and seal the sealing part 12b of the pouch 12 at a seal temperature and pressure, and a preheating member 120 that preheats the sealing part 12b of the pouch 12 and the pair of sealing blocks 110 to a preheat temperature lower than the seal temperature before the sealing part 12b of the pouch 12 is sealed by the pair of sealing blocks 110.

The preheating member 120 includes a first heating body 121, which preheats to the preheat temperature a surface of the sealing part 12b, on which each of the pair of sealing blocks 110 is disposed, and a second heating body 122 which preheats to the preheat temperature a surface of each of the pair of sealing blocks 110, which faces the sealing part 12b.

The preheating member 120 includes a first moving body 125, which moves the first heating body 121 toward the sealing part 12b of the pouch 12 or to an initial position, and a second moving body 126 which moves the second heating body 122 toward each of the pair of sealing blocks 110 or to an initial position. Each of the first moving body 125 and the second moving body 126 may be a cylinder.

Thus, as the first moving body 125 and the second moving body 126 are included, the device 100 for manufacturing a secondary battery according to the second embodiment of the present invention may adjust a distance between the sealing part 12b of the pouch 12 and the first heating body 121, and a distance between ach of the pair of sealing blocks 110 and the second heating body 122. Accordingly, the sealing part 12b of the pouch 12 and the pair of sealing blocks may be more uniformly and stably preheated to the preheat temperature.

The scope of the present invention is defined by the appended claims rather than the foregoing description.

Various modifications may be made within the scope of the present invention.

### [Description of the Symbols]

- 10:: Secondary battery
- 11:: Electrode assembly
- 12:: Pouch
- 12a:: Accommodation part
- 12b:: Sealing part
- 13:: Electrode lead
- 14:: Lead film
- 100:: Device for manufacturing secondary battery
- 110:: Sealing block
- 120:: Preheating member
- 121:: First heating body
- 122:: Second heating body
- 123:: Temperature detecting sensor
- 124:: Controller
- 125:: First moving body
- 126:: Second moving body

## Claims

1. A device (100) for manufacturing a secondary battery (10), the device (100) comprising:
a pair of sealing blocks (110) disposed at both sides, respectively, of a sealing part (12b) of a pouch (12) from which an electrode lead (13) is drawn out, and configured to compress and seal the sealing part (12b) at a seal temperature and pressure; and
a preheating member (120) configured to preheat each of the sealing part (12b) of the pouch (12) and the pair of sealing blocks (110) to a preheat temperature,
wherein the preheating member (120) comprises
a first heating body (121) configured to preheat a surface of the sealing part (12b), on which each of the pair of sealing blocks (110) is disposed, to the preheat temperature, and
a second heating body (122) configured to preheat a surface of each of the pair of sealing blocks (110), which faces the sealing part (12b), to the preheat temperature, **characterised in that** the preheating member further comprises
a temperature detecting sensor (123) configured to detect a temperature of each of the sealing part (12b) of the pouch (12) and the pair of sealing blocks (110); and
a controller (124) configured to stop the preheating of the sealing part (12b) of the pouch (12) and the pair of sealing blocks (110) by stopping an operation of each of the first heating body (121) and the second heating body (122) when the temperature detected by the temperature detecting sensor (123) rises to the preheat temperature.

2. The device (100) of claim 1, wherein the preheat temperature of the sealing part (12b) preheated by the first heating body (121) and the preheat temperature of the pair of sealing blocks (110) preheated by the second heating body (122) are the same as or different from each other.

3. The device (100) of claim 2, wherein when the preheat temperature of the sealing part (12b) preheated by the first heating body (121) and the preheat temperature of the pair of sealing blocks (110) preheated by the second heating body (122) are different from each other, the preheat temperature of the sealing part (12b) preheated by the first heating body (121) is lower than the preheat temperature of the pair of sealing blocks (110) preheated by the second heating body (122).

4. The device (100) of claim 1, wherein the preheat temperature is set to 100°C to 230°C.

5. The device (100) of claim 1, wherein each of the first heating body (121) and the second heating body (122) is provided as a heating lamp.

6. The device (100) of claim 1, wherein the preheating member (120) further comprises:
a first moving body (125) configured to allow the first heating body (121) to move toward the sealing part (12b) or return to an initial position; and
a second moving body (126) configured to allow the second heating body (122) to move toward each of the pair of sealing blocks (110) or return to an initial position.

7. The device (100) of claim 1, wherein the preheat temperature is lower than the seal temperature.

8. A method for manufacturing a secondary battery (10), the method comprising:
a transfer process of transferring the secondary battery (10), wherein the secondary battery (10) comprises an electrode assembly (11) and a pouch (12) configured to accommodate the electrode assembly (11);
a disposing process of disposing a pair of sealing blocks at both sides, respectively, of a sealing part (12b) formed in the pouch (12) of the secondary battery (10);
a preheating process of preheating, by using a preheating member (120), to a preheat temperature a surface of each of the sealing part (12b) of the pouch (12) and the pair of sealing blocks (110), which corresponds to the preheating member (120); and
a sealing process of heating to a seal temperature the sealing blocks (110) preheated to the preheat temperature and then compressing and sealing the sealing part (12b) of the pouch (12), which is preheated to the preheat temperature, wherein the preheating process comprises:
preheating a surface of the sealing part (12b), at which each of the pair of sealing blocks (110) is disposed, to the preheat temperature by a first heating body (121) of the preheating member (120), and preheating a surface of each of the pair of sealing blocks (110), which faces the sealing part (12b), to the preheat temperature by a second heating body (122) of the preheating member (120),
detecting a temperature of each of the sealing part (12b) of the pouch (12) and the pair of sealing blocks (110) by a temperature detecting sensor (123); and
stopping, by a controller (124), the preheating of the sealing part (12b) of the pouch (12) and the pair of sealing blocks (110) by stopping an operation of each of the first heating body (121) and the second heating body (122) when the temperature detected by the temperature detecting sensor (123) rises to the preheat temperature.

9. The method of claim 8, wherein, in the preheating process, the preheat temperature of the sealing part (12b) preheated by the first heating body (121) and the preheat temperature of the pair of sealing blocks (110) preheated by the second heating body (122) are the same as or different from each other.

10. The method of claim 9, wherein, in the preheating process, when the preheat temperature of the sealing part (12b) preheated by the first heating body (121) and the preheat temperature of the pair of sealing blocks (110) preheated by the second heating body (122) are different from each other, the preheat temperature of the sealing part (12b) preheated by the first heating body (121) is lower than the preheat temperature of the pair of sealing blocks (110) preheated by the second heating body (122).

11. The method of claim 8, wherein the preheat temperature is set to 100°C to 230°C.

12. The method of claim 8, wherein a heating lamp is used as each of the first heating body (121) and the second heating body (122).

13. The method of claim 8, wherein the transfer process further comprises temporarily preheating the sealing part (12b) formed in the pouch (12) of the secondary battery (10) during transfer.

## Patentansprüche

1. Vorrichtung (100) zum Herstellen einer Sekundärbatterie (10), die Vorrichtung (100) umfassend:
ein Paar von Abdichtblöcken (110), welche jeweils an beiden Seiten eines Abdichtteils (12b) eines Beutels (12) angeordnet sind, von welchem eine Elektrodenleitung (13) herausgezogen ist, und welche dazu eingerichtet sind, den Abdichtteil (12b) bei einer Abdichttemperatur und -druck zu komprimieren und abzudichten; und
ein Vorwärmungselement (120), welches dazu eingerichtet ist, jedes aus dem Abdichtteile (12b) des Beutels (12) und dem Paar von Abdichtblöcken (110) auf eine Vorwärmtemperatur vorzuwärmen,
wobei das Vorwärmelement (120) umfasst:
einen ersten Wärmekörper (121), welcher dazu eingerichtet ist, eine Fläche des Abdichtteils (12b), an welcher jeder des Paares von Abdichtblöcken (110) angeordnet ist, auf die Vorwärmtemperatur vorzuwärmen, und
einen zweiten Wärmekörper (122), welcher dazu eingerichtet ist, eine Fläche von jedem des Paares von Abdichtblöcken (110), welche dem Abdichtteil (12b) zugewandt ist, auf die Vorwärmtemperatur vorzuwärmen,
**dadurch gekennzeichnet, dass** das Vorwärmelement ferner einen Temperaturdetektiersensor (123), welcher dazu eingerichtet ist, eine Temperatur von jedem aus dem Abdichtteil (12b) des Beutels (12) und dem Paar von Abdichtblöcken (110) zu detektieren; und
eine Steuereinheit (124) umfasst, welche dazu eingerichtet ist, das Vorwärmen des Abdichtteils (12b) des Beutels (12) und des Paares von Abdichtblöcken (110) durch ein Stoppen einer Betätigung von jedem aus dem ersten Wärmkörper (121) und dem zweiten Wärmkörper (122) zu stoppen, wenn die Temperatur, welche durch den Temperaturdetektiersensor (123) detektiert ist, auf die Vorwärmtemperatur steigt.

2. Vorrichtung (100) nach Anspruch 1, wobei die Vorwärmtemperatur des Abdichtteils (12b), welcher durch den ersten Wärmkörper (121) vorerwärmt ist, und die Vorwärmtemperatur des Paares von Abdichtblöcken (110), welche durch den zweiten Wärmkörper (122) vorerwärmt sind, gleich zu oder unterschiedlich voneinander sind.

3. Vorrichtung (100) nach Anspruch 2, wobei, wenn die Vorwärmtemperatur des Abdichtteils (12b), welcher durch den ersten Wärmkörper (121) vorerwärmt ist, und die Vorwärmtemperatur des Paares von Abdichtblöcken (110), welche durch den zweiten Wärmkörper (122) vorerwärmt sind, unterschiedlich voneinander sind, die Vorwärmtemperatur des Abdichtteils (12b), welcher durch den ersten Wärmkörper (121) vorerwärmt ist, niedriger als die Vorwärmtemperatur des Paares von Abdichtblöcken (110) ist, welche durch den zweiten Wärmkörper (122) vorerwärmt sind.

4. Vorrichtung (100) nach Anspruch 1, wobei die Vorwärmtemperatur auf 100 °C bis 230 °C festgesetzt ist.

5. Vorrichtung (100) nach Anspruch 1, wobei jeder des ersten Wärmkörpers (121) und des zweiten Wärmkörpers (122) als eine Wärmelampe bereitgestellt ist.

6. Vorrichtung (100) nach Anspruch 1, wobei das Vorwärmelement (120) ferner umfasst:
einen ersten Bewegkörper (125), welcher dazu eingerichtet ist, dem ersten Wärmkörper (121) zu erlauben, sich zu dem Abdichtteil (12b) zu bewegen oder zu einer Initialposition zurückzukehren; und
einen zweiten Bewegkörper (126), welcher dazu eingerichtet ist, dem zweiten Wärmkörper (122) zu erlauben, sich zu dem Paar von Abdichtblöcken (110) zu bewegen oder zu einer Initialposition zurückzukehren.

7. Vorrichtung (100) nach Anspruch 1, wobei die Vorwärmtemperatur niedriger als die Abdichttemperatur ist.

8. Verfahren zum Herstellen einer Sekundärbatterie (10), das Verfahren umfassend:
einen Übertragungsprozess eines Übertragens der Sekundärbatterie (10), wobei die Sekundärbatterie (10) eine Elektrodenanordnung (11) und einen Beutel (12) umfasst, welcher dazu eingerichtet ist, die Elektrodenanordnung (11) aufzunehmen;
einen Anordnungsprozess eines Anordnens eines Paares von Abdichtblöcken an jeweils beiden Seiten eines Abdichtteils (12b), welcher in dem Beutel (12) der Sekundärbatterie (10) gebildet ist;
einen Vorwärmprozess eines Vorwärmens, unter Verwendung eines Vorwärmelements (120), auf eine Vorwärmtemperatur einer Fläche von jedem aus dem Abdichtteil (12b) des Beutels (12) und dem Paar von Abdichtböcken (110), welche dem Vorwärmelement (120) entsprechen; und
einen Abdichtprozess eines Erwärmens auf eine Abdichttemperatur der Abdichtblöcke (110), welche auf die Vorwärmtemperatur vorgewärmt werden, und dann Komprimieren und Abdichten des Abdichtteils (12b) des Beutels (12), welcher auf die Vorwärmtemperatur vorgewärmt wird,
wobei der Vorwärmprozess umfasst:
Vorwärmen einer Fläche des Abdichtteils (12b), an welcher jedes von dem Paar von Abdichtblöcken (110) angeordnet ist, auf die Vorwärmtemperatur durch einen ersten Wärmkörper (121) des Vorwärmelements (120) und Vorwärmen einer Fläche von jedem des Paares von Abdichtblöcken (110), welche dem Abdichtteil (12b) zugewandt ist, auf die Vorwärmtemperatur durch einen zweiten Wärmkörper (122) des Vorwärmelements (120),
Detektieren einer Temperatur von jedem aus dem Abdichtteil (12b) des Beutels (12) und dem Paar von Abdichtblöcken (110) durch einen Temperaturdetektiersensor (123); und
Stoppen, durch eine Steuereinheit (124), des Vorwärmens des Abdichtteils (12b) des Beutels (12) und des Paares von Abdichtblöcken (110) durch Stoppen einer Betätigung von jedem aus dem ersten Wärmkörper (121) und dem zweiten Wärmkörper (122), wenn die Temperatur, welche durch den Temperaturdetektiersensor (123) detektiert wird, auf die Vorwärmtemperatur steigt.

9. Verfahren nach Anspruch 8, wobei, in dem Vorwärmprozess, die Vorwärmtemperatur des Abdichtteils (12b), welcher durch den ersten Wärmkörper (121) vorerwärmt wird, und die Vorwärmtemperatur des Paares von Abdichtblöcken (110), welche durch den zweiten Wärmkörper (122) vorerwärmt werden, gleich zu oder unterschiedlich voneinander sind.

10. Verfahren nach Anspruch 9, wobei, in dem Vorwärmprozess, wenn die Vorwärmtemperatur des Abdichtteils (12b), welcher durch den ersten Wärmkörper (121) vorerwärmt wird, und die Vorwärmtemperatur des Paares von Abdichtblöcken (110), welche durch den zweiten Wärmkörper (122) vorerwärmt werden, unterschiedlich voneinander sind, die Vorwärmtemperatur des Abdichtteils (12b), welcher durch den ersten Wärmkörper (121) vorerwärmt wird, niedriger als die Vorwärmtemperatur des Paares von Abdichtblöcken (110) ist, welche durch den zweiten Wärmkörper (122) vorerwärmt werden.

11. Verfahren nach Anspruch 8, wobei die Vorwärmtemperatur auf 100 °C bis 230 °C festgesetzt wird.

12. Verfahren nach Anspruch 8, wobei eine Wärmelampe als jeder aus dem ersten Wärmkörper (121) und dem zweiten Wärmkörper (122) verwendet wird.

13. Verfahren nach Anspruch 8, wobei der Übertragungsprozess ferner ein temporäres Vorwärmen des Abdichtteils (12b), welcher in dem Beutel (12) der Sekundärbatterie (10) gebildet wird, während des Übertragens umfasst.

## Revendications

1. Dispositif (100) de fabrication d'une batterie secondaire (10), le dispositif (100) comprenant :
une paire de blocs d'étanchéité (110) disposés respectivement des deux côtés d'une partie d'étanchéité (12b) d'une poche (12) à partir de laquelle un fil d'électrode (13) est extrait, et configurés pour comprimer et sceller la partie d'étanchéité (12b) à une température et une pression d'étanchéité ; et
un organe de préchauffage (120) configuré pour préchauffer chacune de la partie d'étanchéité (12b) de la poche (12) et de la paire de blocs d'étanchéité (110) à une température de préchauffage,
dans lequel l'organe de préchauffage (120) comprend
un premier corps chauffant (121) configuré pour préchauffer une surface de la partie d'étanchéité (12b), sur laquelle est disposé chacun de la paire de blocs d'étanchéité (110), à la température de préchauffage, et
un second corps chauffant (122) configuré pour préchauffer une surface de chacun de la paire de blocs d'étanchéité (110), qui fait face à la partie d'étanchéité (12b), à la température de préchauffage,
**caractérisé en ce que** l'organe de préchauffage comprend en outre
un capteur de détection de température (123) configuré pour détecter une température de chacune de la partie d'étanchéité (12b) de la poche (12) et de la paire de blocs d'étanchéité (110) ; et
un dispositif de commande (124) configuré pour arrêter le préchauffage de la partie d'étanchéité (12b) de la poche (12) et de la paire de blocs d'étanchéité (110) en arrêtant un fonctionnement de chacun du premier corps chauffant (121) et du second corps chauffant (122) lorsque la température détectée par le capteur de détection de température (123) augmente jusqu'à la température de préchauffage.

2. Dispositif (100) selon la revendication 1, dans lequel la température de préchauffage de la partie d'étanchéité (12b) préchauffée par le premier corps chauffant (121) et la température de préchauffage de la paire de blocs d'étanchéité (110) préchauffés par le second corps chauffant (122) sont identiques ou différentes l'une de l'autre.

3. Dispositif (100) selon la revendication 2, dans lequel lorsque la température de préchauffage de la partie d'étanchéité (12b) préchauffée par le premier corps chauffant (121) et la température de préchauffage de la paire de blocs d'étanchéité (110) préchauffés par le second corps chauffant (122) sont différentes l'une de l'autre, la température de préchauffage de la partie d'étanchéité (12b) préchauffée par le premier corps chauffant (121) est inférieure à la température de préchauffage de la paire de blocs d'étanchéité (110) préchauffés par le second corps chauffant (122).

4. Dispositif (100) selon la revendication 1, dans lequel la température de préchauffage est définie de 100°C à 230 °C.

5. Dispositif (100) selon la revendication 1, dans lequel chacun du premier corps chauffant (121) et du second corps chauffant (122) est prévu en tant que lampe chauffante.

6. Dispositif (100) selon la revendication 1, dans lequel l'organe de préchauffage (120) comprend en outre :
un premier corps mobile (125) configuré pour permettre au premier corps chauffant (121) de se déplacer vers la partie d'étanchéité (12b) ou de revenir à une position initiale ; et
un second corps mobile (126) configuré pour permettre au second corps chauffant (122) de se déplacer vers chacun de la paire de blocs d'étanchéité (110) ou de revenir à une position initiale.

7. Dispositif (100) selon la revendication 1, dans lequel la température de préchauffage est inférieure à la température d'étanchéité.

8. Procédé de fabrication d'une batterie secondaire (10), le procédé comprenant :
un processus de transfert consistant à transférer la batterie secondaire (10), dans lequel la batterie secondaire (10) comprend un ensemble d'électrodes (11) et une poche (12) configurée pour héberger l'ensemble d'électrodes (11) ;
un processus de disposition consistant à disposer une paire de blocs d'étanchéité respectivement des deux côtés d'une partie d'étanchéité (12b) formée dans la poche (12) de la batterie secondaire (10) ;
un processus de préchauffage consistant à préchauffer, à l'aide d'un organe de préchauffage (120), à une température de préchauffage, une surface de chacune de la partie d'étanchéité (12b) de la poche (12) et de la paire de blocs d'étanchéité (110), qui correspond à l'organe de préchauffage (120) ; et
un processus d'étanchéité consistant à chauffer, à une température d'étanchéité, les blocs d'étanchéité (110) préchauffés à la température de préchauffage puis à comprimer et sceller la partie d'étanchéité (12b) de la poche (12), qui est préchauffée à la température de préchauffage,
dans lequel le processus de préchauffage comprend :
le préchauffage d'une surface de la partie d'étanchéité (12b), sur laquelle est disposé chacun de la paire de blocs d'étanchéité (110), à la température de préchauffage par un premier corps chauffant (121) de l'organe de préchauffage (120), et le préchauffage d'une surface de chacun de la paire de blocs d'étanchéité (110), qui fait face à la partie d'étanchéité (12b), à la température de préchauffage par un second corps chauffant (122) de l'organe de préchauffage (120),
la détection d'une température de chacune de la partie d'étanchéité (12b) de la poche (12) et de la paire de blocs d'étanchéité (110) par un capteur de détection de température (123) ; et
l'arrêt, par un dispositif de commande (124), du préchauffage de la partie d'étanchéité (12b) de la poche (12) et de la paire de blocs d'étanchéité (110) en arrêtant un fonctionnement de chacun du premier corps chauffant (121) et du second corps chauffant (122) lorsque la température détectée par le capteur de détection de température (123) augmente jusqu'à la température de préchauffage.

9. Procédé selon la revendication 8, dans lequel, dans le processus de préchauffage, la température de préchauffage de la partie d'étanchéité (12b) préchauffée par le premier corps chauffant (121) et la température de préchauffage de la paire de blocs d'étanchéité (110) préchauffés par le second corps chauffant (122) sont identiques ou différentes l'une de l'autre.

10. Procédé selon la revendication 9, dans lequel, dans le processus de préchauffage, lorsque la température de préchauffage de la partie d'étanchéité (12b) préchauffée par le premier corps chauffant (121) et la température de préchauffage de la paire de blocs d'étanchéité (110) préchauffés par le second corps chauffant (122) sont différentes l'une de l'autre, la température de préchauffage de la partie d'étanchéité (12b) préchauffée par le premier corps chauffant (121) est inférieure à la température de préchauffage de la paire de blocs d'étanchéité (110) préchauffés par le second corps chauffant (122).

11. Procédé selon la revendication 8, dans lequel la température de préchauffage est définie de 100°C à 230 °C.

12. Procédé selon la revendication 8, dans lequel une lampe chauffante est utilisée comme chacun du premier corps chauffant (121) et du second corps chauffant (122).

13. Procédé selon la revendication 8, dans lequel le processus de transfert comprend en outre le préchauffage temporaire de la partie d'étanchéité (12b) formée dans la poche (12) de la batterie secondaire (10) pendant le transfert.
